# EUROPEAN PATENT APPLICATION

(11) **EP 4 852 285 A1**
(43) Date of publication of application: **09.12.2026**
(21) Application number: 25747369.4
(22) Date of filing: 01.02.2025
(51) Int. Cl.: H02K 9/19, H02K 5/20, H02K 1/2798, H02K 9/00, H02K 21/24

(54) **AXIAL-FLUX ELECTRIC MACHINE AND COOLING PLATE OF AN AXIAL-FLUX ELECTRIC MACHINE**

(30) Priority: 01.02.2024 US 202463548672 P
(71) Applicant: Weg Equipamentos Elétricos S.A., 89256900 Jaraguá do Sul (BR)
(72) Inventor: DAUNER, Fernando André Lindroth, 89255-442 Jaraguá do Sul (BR); PASSIG, Jhonatan Adilson, 89254-800 Jaraguá do Sul (BR); LUCHINI, Fernando José, 89257-042 Jaraguá do Sul (BR); MANENTE, João Paulo Correa, 89259-560 Jaraguá do Sul (BR); CARVALHO, Thiago Piazera, 89252-090 Jaraguá do Sul (BR); SONNENHOHL, Alexandre Vitor Hertel, 89255-074 Jaraguá do Sul (BR)
(74) Representative: Plasseraud IP
(86) International application number: PCT/BR2025/050035
(87) International publication number: WO 2025/160647

(57) **Abstract**

The present invention relates to an axial-flux electric machine (1) comprising a housing (2) and an active core comprising at least one stator (7) and at least one rotor (8), the machine further comprising at least one cooling plate (9) with at least one internal cooling channel (10), the at least one cooling plate (9) being adjacent to the at least one stator (7).

## Description

### FIELD OF INVENTION

The present invention relates to an axial-flux electric machine and, more specifically, to an axial-flux motor or generator.

### BACKGROUND OF THE INVENTION

Axial electromagnetic flux electric machines are widely known in the art and basically comprise at least one stator and at least one disc-shaped rotor, wherein the electromagnetic flux travels in the axial direction of the machine's rotating shaft. They may comprise either electric motors or electric generators.

In one of the known solutions for cooling axial-flux motors, an external pump pumps cooling fluid into the interior of the motor (preferably into the interior of the housing and/or stator) so that the fluid can extract heat from the motor.

Thus, it is known in the state of the art to form cooling channels for the passage of cooling fluid through the internal components of the motor.

Document EP2606561, for example, discloses an electric machine with an annular chamber through which a cooling medium can circulate around the stator coils.

Document KR101999860, in turn, discloses an electric motor with a cooling solution comprising a cooling fluid distribution chamber that includes a portion of the introduced cooling fluid, and a second cooling fluid distribution path for guiding another portion of the cooling fluid toward the rear cover side.

Document WO2019/171318, in turn, discloses a cooling component for an electric motor comprising a channel defined by an outer ring, an inner ring concentric with the outer ring, and linear segments extending radially from the inner ring toward the outer ring.

### OBJECTIVES OF THE INVENTION

It is one of the objectives of the present invention to provide an axial-flux electric machine with a cooling plate that enables greater heat extraction capacity.

It is a further object of the present invention to provide an axial-flux electric machine with a cooling plate that allows for a cooling channel having a heat exchange area with greater efficiency relative to the machine's stator.

It is another object of the present invention to provide an axial-flux electric machine with a cooling plate that is part of the machine's structural assembly.

It is yet another object of the present invention to provide an axial-flux electric machine with a cooling plate capable of connecting two stators.

### Summary of the Invention

The present invention relates to a cooling plate for an axial-flux electric machine and to an axial-flux electric machine comprising at least one cooling plate.

The axial-flux electric machine comprises a housing and an active core comprising at least one stator and at least one rotor. The cooling plate comprises at least one internal cooling channel and is adjacent to the at least one stator.

In one embodiment of the invention, the cooling plate is manufactured by overmolding onto the at least one stator. However, in alternative embodiments, the plate could be manufactured in a different way, such as by machining.

In one embodiment of the invention, the machine has two stators, and the cooling plate connects the two stators.

The cooling plate may have a radial dimension extending to the housing, and in this case, the housing may have a portion configured to receive an outer edge portion of the cooling plate. In one embodiment of the invention, the housing is formed by a front cover and a rear cover, and the outer edge portion is formed at a junction region of the front and rear covers. In this embodiment, the outer edge portion of the cooling plate has holes that align with holes arranged in the housing.

In one embodiment of the invention, the cooling plate is formed in two parts assembled face-to-face.

In one embodiment of the invention, the two cooling plate parts are assembled in a rotated and offset manner to create the at least one cooling channel.

The cooling plate may also be provided with a seal to prevent the escape of cooling fluid.

In embodiments of the invention, the cooling plate further comprises cooling fluid inlet and outlet openings.

The cooling channel may have different shapes, such as, for example, a zigzag channel, a double-C channel, a channel with a plurality of double-C curves, a channel with curved zigzags, or a combination of shapes.

### BRIEF DESCRIPTION OF THE DRAWINGS

The present invention will be described in greater detail below, with reference to the accompanying drawings, in which:
Figure 1 - is a perspective view of an axial-flux electric machine according to an embodiment of the present invention, the machine being illustrated with a cut-away section removed to show the interior of the motor;
Figure 2 - is a plan view of one of the cutting planes of Figure 1;
Figure 3 - is a perspective view of a portion of the internal elements-stators and cooling plate-of the axial-flux electric machine according to an embodiment of the present invention;
Figure 4 - is a schematic plan view of an embodiment of the cooling plate of the axial-flux electric machine according to an embodiment of the present invention, also showing a cross-section along the line A;
Figure 5 - is a plan view of a cooling plate of an axial-flux electric machine according to an embodiment of the present invention;
Figure 6 - is a schematic illustration of a shape of a cooling channel of a cooling plate of an axial-flux electric machine according to an embodiment of the present invention;
Figure 7 - is a schematic illustration of a shape of a cooling channel of a cooling plate of an axial-flux electric machine according to an embodiment of the present invention; and
Figure 8 - is a schematic illustration of a shape of a cooling channel of a cooling plate of an axial-flux electric machine according to an embodiment of the present invention.

### DETAILED DESCRIPTION OF THE INVENTION

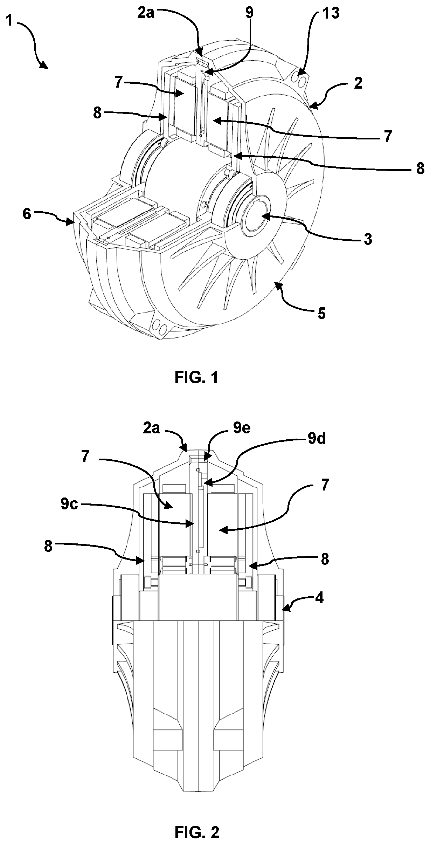

Figure 1 shows an axial-flux motor according to an embodiment of the present invention.

Although the present invention is described as embodied in an electric motor, it should be understood that the solution of the present invention could equally be applied to other axial-flux electric machines, such as axial-flux generators.

As can be seen in Figure 1, the motor 1 comprises a housing 2 with a central through-hole 3. The through-hole 3 is intended to receive a shaft 4.

In the embodiment of the invention shown in the figures, the housing 2 is formed by a front cover 5 and a rear cover 6. However, it should be understood that the housing could be formed differently, for example, with a central body part and two side covers.

As best illustrated in Figure 2, the motor further comprises at least one stator 7 and at least one rotor 8. The figure shows a symmetrical configuration with two stators and two rotors, but other embodiments of the present invention could feature a different configuration, such as, for example, a motor with a central rotor and two stators, or a motor with a stator and a rotor in a single-sided arrangement.

The axial-flow machine of the present invention further comprises at least one cooling plate 9 for cooling the internal components of the motor, wherein the at least one cooling plate is disposed adjacent to the at least one stator 7.

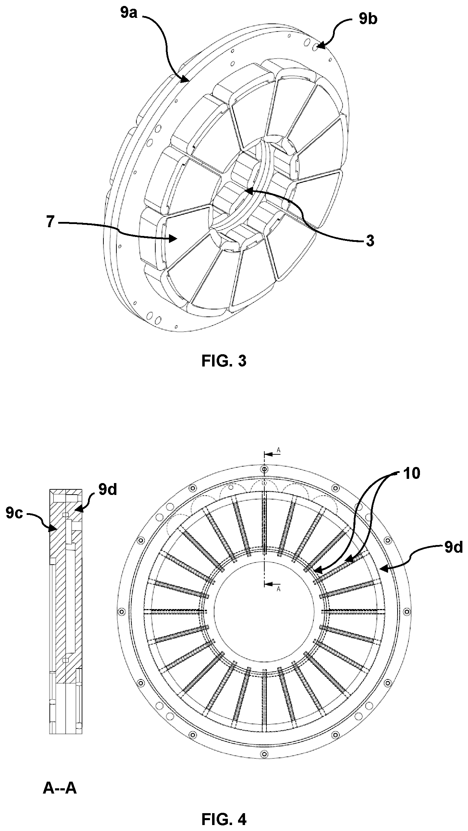

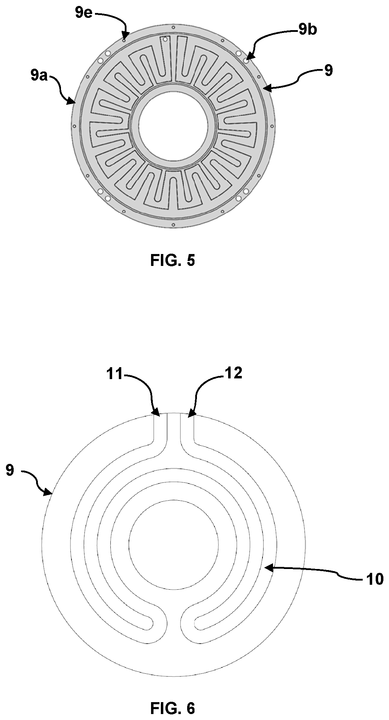

Figure 3 shows a sectional view of the cooling plate 9, in which internal cooling channels 10 (see also Figures 5 to 8) for the passage of cooling fluid can be seen.

In a preferred embodiment of the present invention, the cooling plate 9 is injection-overmolded onto the laminated stator. Also in the preferred embodiment, the cooling plate is made of aluminum injected over the laminated steel stator.

In other embodiments of the invention, however, the plate 9 could be manufactured differently, such as, for example, from a machined component to be mounted on the stator or it could be made from another material, such as resin.

Thus, as best illustrated in Figures 1 to 3, in the embodiment of the invention illustrated in the drawings, the cooling plate 9 connects the two stators 7.

Furthermore, as can be seen in Figures 1 and 2, in the illustrated embodiment of the present invention, the cooling plate 9 has a radial dimension extending to the housing 2, and the housing 2 has a portion 2a configured to receive an outer edge portion 9a of the plate 9 (see Figures 1 and 4). In the illustrated embodiment, the portion 2a is formed at the junction region of the covers 5 and 6 of the housing 2.

In this embodiment of the invention, the outer edge portion 9a of the cooling plate 9 may have holes 9b aligned with holes 13 in the housing 2, allowing the plate 9 to be secured at the same time as the covers 5 and 6 that form the housing 2. Also in this embodiment, a seal, such as an O-ring or assembly paste, may be added.

Thus, the cooling plate 9 can be constructed as part of the machine's structural assembly.

It should be noted, however, that the cooling plate could have other shapes in alternative embodiments of the invention, such as, for example, a non-circular shape that did not extend to the housing.

In the embodiment of the invention shown in the figures, the cooling plate 9 is formed of two parts 9c, 9d assembled face-to-face (see primarily Figures 2 to 5). This configuration allows the stator assembly to be combined on both sides and provides improved cooling performance by increasing the channel area. The two plate parts 9c, 9d may be identical, allowing the use of a single manufacturing tool; however, in other embodiments, the plate parts may differ.

In this embodiment of the invention, the plate parts 9c, 9d have holes 9e for fastening them together. However, it should be noted that other fastening methods could be used, such as, for example, adhesive.

The cooling plate 9 may also be provided with a seal to prevent the escape of cooling fluid.

It should be noted that, in alternative embodiments of the present invention, the cooling plate 9 could be formed as a single piece or even in multiple parts.

Figure 4 schematically shows a cooling plate and its cross-section along section A-A. As schematically shown in Figure 4, in one embodiment of the invention, the two plate parts 9c, 9d can be assembled in a rotated and offset manner so as to form the cooling channels 10.

However, the cooling channels 10 may have different shapes and may be manufactured in different ways.

In this regard, Figure 5 shows a preferred embodiment of the invention in which the cooling channel has a zigzag shape.

Figures 6 to 8 show different exemplary embodiments of the cooling channel of a cooling plate according to the present invention.

The figures further show cooling fluid inlet and outlet openings 11, 12 provided in the cooling plate.

In the exemplary embodiment of Figure 6, the cooling channel 10 is formed as a double-C shape. Thus, the cooling fluid entering through the inlet 11 flows through the double-C shaped channel and exits through the outlet 12 after exchanging heat to cool the internal components of the machine.

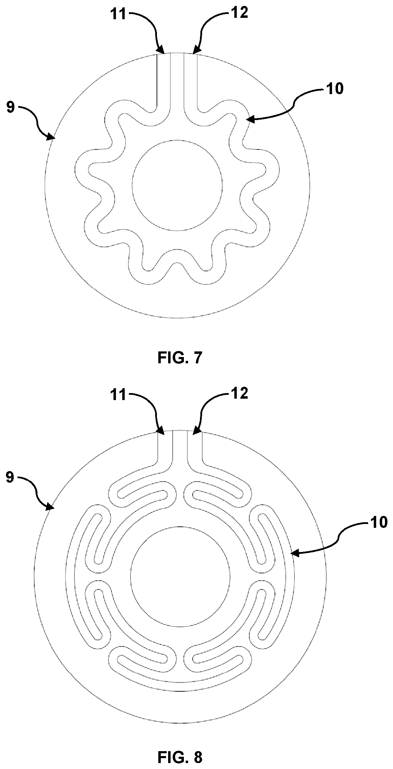

In the exemplary embodiment of Figure 7, the cooling channel 10 is formed as a channel with curved zigzags. Thus, the cooling fluid entering through the inlet 11 flows through the channel formed with curved zigzags and exits through the outlet 12 after exchanging heat to cool the internal components of the machine.

In the exemplary embodiment of Figure 8, the cooling channel 10 is formed as a channel defined by a plurality of double-C curves. Thus, the cooling fluid entering through the inlet 11 flows through the channel formed by the various double-C curves and exits through the outlet 12 after exchanging heat to cool the internal components of the machine.

It should be noted that, as mentioned above, the cooling channel 10 can take on other shapes, as well as a combination of shapes.

Having described exemplary embodiments of the present invention, it should be understood that the scope of the present invention encompasses other possible variations of the described inventive concept, being limited solely by the content of the claims, including possible equivalents.

## Claims

1. An Axial-flux electric machine (1) comprising a housing (2) and an active core comprising at least one stator (7) and at least one rotor (8), **characterized by the fact that** said machine further comprises at least one cooling plate (9) with at least one internal cooling channel (10), the at least one cooling plate (9) being adjacent to the at least one stator (7).

2. The machine according to claim 1, **characterized by the fact that** the machine has two stators (7) and the at least one cooling plate (9) connects the two stators (7).

3. The machine according to any one of claims 1 or 2, **characterized by the fact that** the at least one cooling plate (9) has a radial dimension extending to the housing (2) and the housing (2) has a portion (2a) configured to receive an outer edge portion (9a) of the cooling plate (9).

4. The machine according to any one of claims 1 to 3, **characterized by the fact that** the at least one cooling plate (9) is formed of two plate parts (9c, 9d) assembled face-to-face.

5. The machine according to claim 4, **characterized by the fact that** the two cooling plate parts (9c, 9d) are mounted in a rotated and offset manner to create the at least one cooling channel (10).

6. The machine according to any one of claims 1 to 5, **characterized by the fact that** the at least one cooling plate (9) receives a seal to prevent the escape of cooling fluid.

7. The machine according to any one of claims 1 to 6, **characterized by the fact that** the at least one cooling plate (9) further comprises cooling fluid inlet holes and cooling fluid outlet holes (11, 12).

8. The machine according to any one of claims 1 to 7, **characterized by the fact that** the cooling channel (10) is formed as a channel with curved zigzags.

9. A cooling plate (9) for an axial flow electrical machine (1) comprising a housing (2) and an active core comprising at least one stator (7) and at least one rotor (8), **characterized by the fact that** said plate comprises at least one internal cooling channel (10), the cooling plate (9) being adjacent to the at least one stator (7).

10. The cooling plate (9), according to claim 9, **characterized by the fact that** it is formed in two parts (9c, 9d) assembled face-to-face.

11. The cooling plate (9) according to any one of claims 9 or 10, **characterized by the fact that** the two cooling plate parts (9c, 9d) are mounted in a rotated and offset manner to create the at least one cooling channel (10).

12. The cooling plate (9), according to any one of claims 9 to 11, **characterized by the fact that** it has a seal to prevent the escape of cooling fluid.

13. The cooling plate (9), according to any one of claims 9 to 12, **characterized by the fact that** it further comprises cooling fluid inlet holes and cooling fluid outlet holes (11, 12).

14. The cooling plate (9), according to any one of claims 9 to 13, **characterized by the fact that** the cooling channel (10) is formed as a zigzag channel.
